# EUROPÄISCHE PATENTSCHRIFT

(11) **EP 2 769 081 B1**
(45) Veröffentlichungstag und Bekanntmachung des Hinweises auf die Patenterteilung: **14.02.2018**
(21) Anmeldenummer: 12772093.6
(22) Anmeldetag: 26.09.2012
(51) Int. Cl.: F02M 61/16, F16B 2/24, F16B 21/20, B23K 26/20, F02M 61/14, B23K 26/28

(54) **VERFAHREN ZUR HERSTELLUNG EINES EINSPRITZVENTILS SOWIE EINSPRITZVENTIL**
PROCESS FOR MANUFACTURING AN INJECTION VALVE AND AN INJECTION VALVE
PROCÉDÉ DE FABRICATION D'UNE SOUPAPE D'INJECTION ET SOUPAPE D'INJECTION

(30) Priorität: 18.10.2011 DE 102011084704
(43) Veröffentlichungstag der Anmeldung: 27.08.2014
(73) Patentinhaber: Robert Bosch GmbH, 70442 Stuttgart (DE)
(72) Erfinder: SCHEFFEL, Martin, 71665 Vaihingen (DE); BORMANN, Axel, 96049 Bamberg (DE); WIESCHOLLEK, Sebastian, 71701 Schwieberdingen (DE)
(86) Internationale Anmeldenummer: PCT/EP2012/068983
(87) Internationale Veröffentlichungsnummer: WO 2013/056957

(56) Entgegenhaltungen:
- DE-A1- 3 600 311
- DE-A1- 10 108 464
- DE-A1-102004 049 710
- DE-A1-102008 025 788
- DE-U- 1 873 834
- US-A1- 2009 261 286

## Beschreibung

### Stand der Technik

Die vorliegende Erfindung betrifft ein Ausrichtelement für ein Einspritzventil sowie ein Verfahren zur Herstellung eines Einspritzventils mit einer Steckeranspritzung.

Einspritzventile sind aus dem Stand der Technik in unterschiedlichen Ausgestaltungen bekannt. Häufig sind die Einbausituationen für Einspritzventile bei verschiedenen Motortypen unterschiedlich, insbesondere hinsichtlich ihrer Ausrichtung. Hierbei ist allerdings die Ausrichtung der Einspritzventile wichtig, da je nach Ausrichtung ein unterschiedliches Spraybild des Einspritzventils erhalten wird. Da das Spraybild jedoch Auswirkungen auf den Kraftstoffverbrauch und Abgasemissionen hat, muss das Einspritzventil bei modernen Motoren sehr genau ausgerichtet sein. Eine Ausrichtmöglichkeit wäre beispielsweise, flächenartige Anschliffe an der Einspritzbaugruppe vorzusehen. Dies führt jedoch zu einer unerwünschten Erhöhung der Kosten. Ferner muss gegebenenfalls für jeden Motortyp ein spezieller Anschliff vorgesehen werden. Alternativ könnte ein Zusatzbauteil mit Ausrichtflächen am Einspritzventil angeordnet werden. Dies hätte auch die gleichen Nachteile wie die oben beschriebenen Flächenanschliffe und der Aufwand der Ausrichtung wird auf den Ausrichtvorgang bei der Montage des Zusatzbauteils vorverlegt. Weiterhin weisen moderne Einspritzventile eine teilweise Kunststoffumspritzung zur Ausbildung eines Steckeranschlusses auf. Hierbei könnte auch der Steckeranschluss als Ausrichtelement für das Einspritzventil verwendet werden, jedoch ergeben sich hierbei ebenfalls die aufgrund der Vielzahl von Motortypen notwendige große Anzahl von Spritzgussformen als Nachteil.

Aus der DE 101 08 464 A1 ist bereits ein Brennstoffeinspritzventil bekannt, das eine Magnetspule, die mit einem von einer Rückstellfeder beaufschlagten Anker zusammenwirkt, der zusammen mit einer Ventilnadel ausgebildet ist, wobei an der Ventilnadel ein Ventilschließkörper ausgebildet ist, der mit einem Ventilsitzkörper einen Dichtsitz bildet, und wenigstens eine mit der Magnetspule in leitender Verbindung stehende Kontaktfahne umfasst. Ein metallischer Hohlkörper bildet eine zulaufseitige Verlängerung des Brennstoffeinspritzventils, wobei ein Anschlussstecker mit einer Kontaktfahne so an den metallischen Hohlkörper ansteckbar ist, dass die Kontaktfahne des Anschlusssteckers mit der Kontaktfahne der Magnetspule in leitende Verbindung setzbar ist. Der Anschlussstecker besitzt dabei eine Halterung, die den metallischen Hohlkörper zumindest teilweise umgreift.

### Offenbarung der Erfindung

Das erfindungsgemäße Verfahren zur Herstellung eines Einspritzventils mit einer Umspritzung mit den Merkmalen des Anspruchs 1 weist den Vorteil auf, dass ein Ausrichtelement vorgesehen wird, welches einfach auf ein Teil einer vormontierten Einspritzbaugruppe aufgeschoben werden kann, so dass die Einspritzbaugruppe mitsamt dem Ausrichtelement in einer Spritzgussform in ausgerichteter Weise eingelegt werden kann und in einem nächsten Schritt die Umspritzung angespritzt werden kann. Das Ausrichtelement ist dabei während des Aufschiebevorgangs flexibel und wird an der Einspritzbaugruppe mittels eines Schweißschrittes angeschweißt. Gleichzeitig mit dem Anschweißen erfolgt hierbei eine Versteifung des Ausrichtelements, so dass dieses insbesondere dem anschließenden Spritzvorgang standhält. Hierzu ist das Ausrichtelement im Wesentlichen scheibenförmig gebildet und weist wenigstens einen Schlitz auf. Der Schlitz stellt dabei die Flexibilität während des Aufschiebevorgangs bereit. Im anschließenden Schweißschritt wird der Schlitz gleichzeitig mit dem Anschweißen des Ausrichtelements an die Einspritzbaugruppe zugeschweißt, so dass die dann für den Spritzvorgang notwendige Steifigkeit des Ausrichtelements vorhanden ist. Somit löst die Erfindung auf geschickte Weise das Problem, dass einerseits das Ausrichtelement leicht aufschiebbar sein soll, was eine reduzierte Steifigkeit verlangt, und für den Spritzvorgang jedoch möglichst steif sein soll, um eine Verformung aufgrund eines hohen Spritzdruckes und damit eine Missausrichtung in der Spritzgussform, zu vermeiden. Das durch den Schweißvorgang versteifte Ausrichtelement vermeidet dabei insbesondere, dass eine Deformation während des Spritzvorgangs derart auftritt, dass das Ausrichtelement mit einem Wandbereich der Spritzgussform in Kontakt kommt und somit im fertigen Einspritzventil von außen sichtbar wäre. Hierdurch wäre eine Spritzwasserdichtheit des Einspritzventils jedoch nicht mehr gegeben. Erfindungsgemäß wird jedoch eine Versteifung des Ausrichtelements gleichzeitig mit dem Anschweißvorgang des Ausrichtelements an dem vorzugsweise rohrförmigen Teil der Einspritzbaugruppe ausgeführt, so dass in einem Schritt gleichzeitig das Ausrichtelement an der Einspritzbaugruppe befestigt und versteift werden kann.

Die Unteransprüche zeigen bevorzugte Weiterbildungen der Erfindung.

Besonders bevorzugt wird für den Schritt des Anschweißens die Einspritzbaugruppe mitsamt dem darauf aufgeschobenen Ausrichtelement gedreht. Hierdurch kann ein besonders einfacher Schweißschritt ausgeführt werden.

Gemäß einer weiteren bevorzugten Ausgestaltung der Erfindung fallen eine Schweißebene, in welcher das Ausrichtelement an die Einspritzbaugruppe angeschweißt wird und eine Schweißebene, in welcher der Schlitz zugeschweißt wird, auseinander. Dies ermöglicht eine größere Gestaltungsfreiheit des Ausrichtelements, ohne dass dadurch eine Qualität der Schweißnaht zur Fixierung des Ausrichtelements an der Einspritzbaugruppe verschlechtert wird.

Besonders bevorzugt weist das Ausrichtelement eine Zunge auf, welche im Schritt des Anschweißens zur Versteifung zumindest teilweise mit einem Grundbereich des Ausrichtelements verschweißt wird. Die Zunge kann beispielsweise auf einfache Weise durch einen Stanzschritt, in welchem gleichzeitig auch der Schlitz im Ausrichtelement erzeugt wird, hergestellt werden.

Weiter bevorzugt weist das Ausrichtelement eine erste und/oder zweite Lasche auf, wobei die erste und/oder zweite Lasche benachbart zur Zunge angeordnet ist. Im Schritt des Anschweißens wird dann die Zunge mit der ersten und/oder zweiten Lasche verschweißt. Durch diese Maßnahme kann auf einfache Weise eine Verschweißung und somit Versteifung des Ausrichtelements in eine andere Ebene gelegt werden.

Besonders bevorzugt erfolgt das Schweißen mittels eines Lasers oder alternativ mittels zweier, um 180° einander gegenüberliegend angeordneten Laser. Bei der Verwendung von zwei Lasern muss die Einspritzbaugruppe nur um 180° gedreht werden.

Ferner betrifft die vorliegende Erfindung ein Einspritzventft mit einem Ausrichtelement gemäß Anspruch 7, welches an einer vormontierten Einspritzbaugruppe befestigbar ist und zur Ausrichtung in einem Spritzgusswerkzeug eingerichtet ist, um eine Umspritzung, insbesondere eine Steckeranspritzung, an die Einspritzbaugruppe anzuspritzen. Das Ausrichtelement umfasst dabei einen in Axialrichtung verlaufenden Bund und einen sich an den Bund radial anschließenden Grundbereich und einen sich an den Grundbereich radial anschließenden Randbereich. Ferner ist eine zentrale Durchgangsöffnung und ein erster Schlitz, welcher in Radialrichtung gerichtet ist und in Axialrichtung des Ausrichtelements durchgehend gebildet ist, vorgesehen. Der erste Schlitz verläuft dabei von der Durchgangsöffnung ausgehend radial nach außen. Hierdurch ergibt sich eine Flexibilität des Ausrichtelements, insbesondere im Bereich des inneren Bundes. Dies ermöglicht somit ein sehr einfaches Aufschieben des Ausrichtelements auf ein insbesondere rohrförmiges Teil der Einspritzbaugruppe. Im anschließenden Befestigungsschritt wird dann der Bund an dem Einspritzbauteil angeschweißt und das Ausrichtelement somit versteift. Anschließend kann dann eine Umspritzung, insbesondere eine Steckeraufnahme, vorzugsweise im Bereich des Ausrichtelements, angespritzt werden. Die Durchgangsöffnung ist vorzugsweise elliptisch.

Weiter bevorzugt umfasst das Ausrichtelement wenigstens einen zweiten, in Umfangsrichtung gerichteten bogenförmigen Schlitz, welcher ebenfalls in Axialrichtung durchgehend ausgebildet ist. Durch das Vorsehen eines radialen und eines in Umfangsrichtung gerichteten Schlitzes ergibt sich eine Flexibilität sowohl in radialer und axialer Richtung als auch in Umfangsrichtung, so dass das Aufschieben des Ausrichtelements besonders einfach vorgenommen werden kann.

Besonders bevorzugt schneiden sich der erste und zweite Schlitz des Ausrichtelements. Hierdurch wird eine weitere Vergrößerung der Flexibilität des Ausrichtelements erreicht, wodurch das Aufschieben des Ausrichtelements noch einfacher gestattet wird.

Gemäß einer weiteren bevorzugten Ausgestaltung der Erfindung umfasst das Ausrichtelement ferner eine Zunge, welche in einen der Schlitze vorsteht. Durch die Zunge kann eine besonders einfache Versteifung des Ausrichtelements durch einen Verschweißvorgang erreicht werden, in dem die Zunge an einen Teil des Ausrichtelements angeschweißt wird. Vorzugsweise wird durch die Schweißung gleichzeitig wenigstens einer der Schlitze, vorzugsweise alle Schlitze, geschlossen.

Weiter bevorzugt umfasst das Ausrichtelement ferner eine erste und/oder zweite Lasche, welche am Grundbereich angeordnet sind und vorzugsweise ist die erste und/oder zweite Lasche benachbart zur Zunge angeordnet und die Laschen können somit während des Verschweißschritts mit der Zunge verschweißt werden.

Für eine noch bessere Flexibilität des Ausrichtelements umfasst dieses ferner einen dritten, in Radialrichtung gerichteten und axial durchgehenden Schlitz, und/oder einen vierten, in Umfangsrichtung gerichteten und axial durchgehenden Schlitz, und besonders bevorzugt sind der erste und dritte Schlitz und der zweite und vierte Schlitz symmetrisch zu einer Mittelebene durch das Ausrichtelement gebildet.

Weiter bevorzugt umfasst das Ausrichtelement ferner einen zweiten, in Radialrichtung gerichteten Schlitz, wobei wenigstens einer der radialen Schlitze als in Radialrichtung durchgehender Schlitz von der Durchgangsöffnung bis zum Rand des Ausrichtelements verläuft. Hierdurch weist das Ausrichtelement eine C-förmige Form auf und ist nicht mehr an wenigstens einem Bereich in Umfangsrichtung geschlossen. Hierdurch kann das Ausrichtelement in Umfangsrichtung aufgespreizt werden, so dass eine noch leichtere Montierbarkeit erreicht wird.

Weiter bevorzugt weist wenigstens einer der Schlitze einen erweiterten Bereich auf. Der erweiterte Bereich kann beispielsweise bogenförmig sein. Dies führt insbesondere nach einem erfolgten Spritzdurchgang, bei dem die Schlitze durch das Spritzgussmaterial ausgefüllt sind, zu einer verbesserten Steifigkeit und einem sicheren Auffüllen der relativ schmalen Schlitze mit Spritzgussmaterial.

Weiter bevorzugt umfasst das Ausrichtelement einen sich zu einer Grundebene geneigt angeordneten Grundbereich.

Um eine noch bessere Durchlässigkeit für das Spritzgussmaterial zu erhalten, weist das Ausrichtelement vorzugsweise am Grundbereich eine Vielzahl von Durchlassöffnungen, insbesondere kreisförmigen Durchlassöffnungen, auf.

Um darüber hinaus eine einfache und sichere Ausrichtung des Ausrichtelements im Spritzwerkzeug zu ermöglichen, weist das Ausrichtelement vorzugsweise am Randbereich wenigstens eine Einrichtung zum Ausrichten auf. Die Einrichtung zum Ausrichten ist vorzugsweise eine Ausnehmung, beispielsweise ein V-förmiger Einschnitt oder eine gerade Anlagefläche am Randbereich des Ausrichtelements. Besonders bevorzugt sind zwei Ausrichteinrichtungen einander um 180° gegenüberliegend am Randbereich angeordnet.

Um sicherzustellen, dass nach dem Spritzvorgang eine hohe Fluiddichtigkeit zwischen dem Ausrichtelement und dem Spritzgussmaterial erhalten wird, weist das Ausrichtelement vorzugsweise eine Labyrinthanordnung mit wenigstens einer Nut auf. Vorzugsweise sind mehrere, insbesondere koaxial zueinander angeordnete und in Umfangsrichtung verlaufende, Nuten vorgesehen. Durch diese Labyrintheinrichtung kann eine sichere Abdichtung zwischen dem Spritzgussmaterial und dem Ausrichtelement erreicht werden. Die Labyrinthanordnung ist vorzugsweise an beiden Flachseiten des Ausrichtelements vorgesehen. Dadurch eignet sich das Ausrichtelement insbesondere für Anwendungen in Fahrzeugen, bei denen ein Kontakt mit Spritzwasser oder dgl. nicht ausgeschlossen werden kann.

Ferner betrifft die vorliegende Erfindung ein Einspritzventil mit einem erfindungsgemäßen Ausrichtelement, an welchem eine Umspritzung, insbesondere für einen Stecker, angespritzt ist. Dabei ist das Ausrichtelement vorzugsweise vollständig von der Umspritzung umgeben. Bevorzugt ist an der Umspritzung eine oder mehrere Ausrichtfläche(n) oder dgl. zur Ausrichtung für eine Montage in einer Brennkraftmaschine vorgesehen. Das Ausrichtelement erlaubt ein sehr genaues Anspritzen von Ausrichtflächen an der Umspritzung.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische, teilweise geschnittene Ansicht eines Einspritzventils mit einem ersten erfindungsgemäßen Ausrichtelement,
- Figur 2: eine schematische Schnittansicht einer Einspritzbaugruppe des in Figur 1 gezeigten Einspritzventils,
- Figur 3: eine schematische Draufsicht auf das Ausrichtelement,
- Figur 4: eine schematische Schnittansicht entlang der Linie B-B von Figur 3,
- Figur 5: eine Schnittansicht entlang der Linie C-C von Figur 3,
- Figur 6: eine perspektivische Ansicht des Ausrichtelements,
- Figur 7: eine Seitenansicht des Ausrichtelements,
- Figur 8: eine schematische Darstellung des Schweißvorgangs des Ausrichtelements an ein Teil der Einspritzbaugruppe,
- Figuren 9 bis 11: Darstellungen eines Ausrichtelements gemäß einem zweiten Ausführungsbeispiel der Erfindung,
- Figuren 12 bis 14: Darstellungen eines Ausrichtelements gemäß einem dritten Ausführungsbeispiel der Erfindung,
- Figur 15: eine schematische Draufsicht eines Ausrichtelements gemäß einem vierten Ausführungsbeispiel der Erfindung,
- Figur 16: eine perspektivische Darstellung eines Ausrichtelements gemäß einem fünften Ausführungsbeispiel der Erfindung, und
- Figur 17: eine perspektivische Darstellung eines Ausrichtelements gemäß einem sechsten Ausführungsbeispiel der Erfindung.

### Bevorzugte Ausführungsform der Erfindung

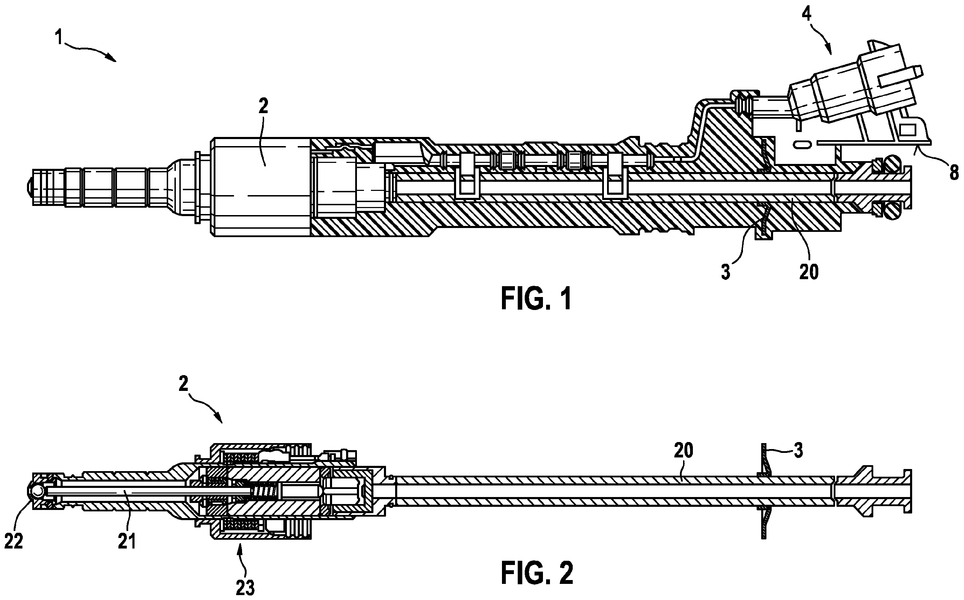

Nachfolgend wird unter Bezugnahme auf die Figuren 1 bis 8 ein Einspritzventil mit einem ersten erfindungsgemäßen Ausrichtelement 3 sowie ein Verfahren zur Herstellung des Einspritzventils im Detail beschrieben.

Wie aus Figur 1 ersichtlich ist, umfasst das Einspritzventil 1 eine in Figur 2 im Detail gezeigte Einspritzbaugruppe 2, welche in diesem Ausführungsbeispiel einen Magnetaktor 23 umfasst, um eine Ventilnadel 21 zu bewegen. Die Ventilnadel gibt einen Ventilsitz 22 an einem Ende des Einspritzventils frei bzw. verschließt diesen. Das Einspritzventil 1 umfasst ferner eine Steckeranspritzung 4 (Umspritzung), welche an die in Figur 2 gezeigte Einspritzbaugruppe 2 angespritzt wird. Die Einspritzbaugruppe 2 ist dabei eine vormontierte Baugruppe. Ein scheibenförmiges Ausrichtelement 3 ist dabei an einem rohrförmigen Teil 20 der Einspritzbaugruppe 2 vormontiert. Mittels des Ausrichtelements 3 wird die Einspritzbaugruppe 2 in eine Spritzgussform eingelegt und dann die Steckeranspritzung 4 angespritzt. Die Steckeranspritzung 4 weist dabei eine Ausrichtfläche 8 auf, welche, wie auch der eigentliche Steckeranschluss, individuell für die jeweiligen Kunden und deren Anforderungen gefertigt werden muss. Die Ausrichtfläche 8 dient später beim Montageschritt des Einspritzventils in der Brennkraftmaschine zur Ausrichtung des Einspritzventils, damit das durch das Einspritzventil bereitgestellte Spraybild den gewünschten Anforderungen des Kunden entspricht. Von daher muss schon während des Anspritzvorgangs der Steckeranspritzung die Einspritzbaugruppe 2 richtig in der Spritzgussform ausgerichtet sein, damit später die Sprayausrichtung des Einspritzventils in Bezug auf die Ausrichtfläche 8, welche durch den Spritzvorgang an der Umspritzung hergestellt wird, stimmt.

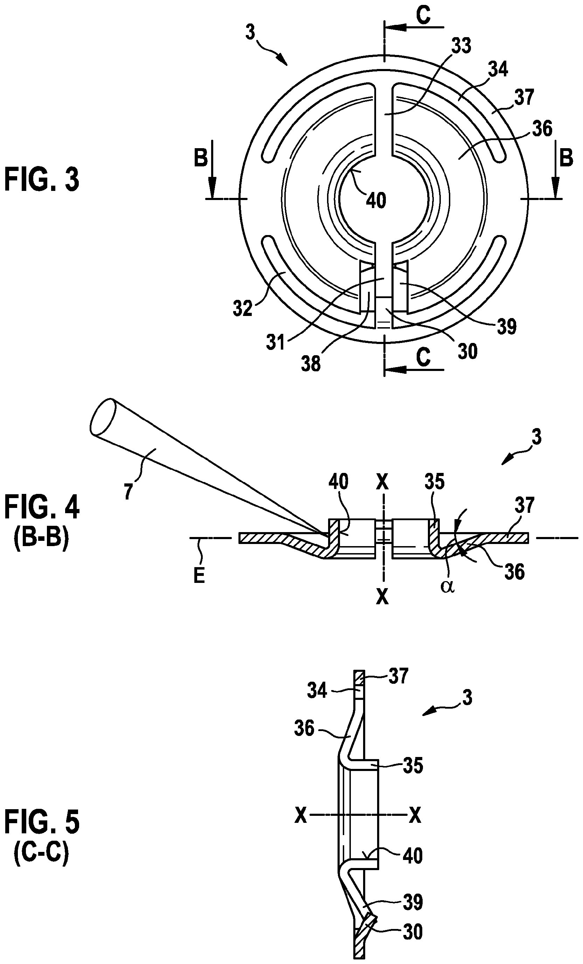

Das Ausrichtelement 3 ist im Detail in den Figuren 3 bis 8 dargestellt. Das Ausrichtelement 3 ist ein im Wesentlichen scheibenförmiges Element und weist eine mittige Durchgangsöffnung 40 auf. Die Durchgangsöffnung 40 wird durch einen umlaufenden Bund 35, welcher in Axialrichtung X-X des Ausrichtelements vorsteht, begrenzt. An den Bund 35 grenzt ein sich zu einer Grundebene E des Ausrichtelements 3 geneigter Grundbereich 36 an, an den sich ein abschließender Randbereich 37 anschließt. Der Randbereich 37 liegt dabei in der Grundebene E des Ausrichtelements 3. Das Ausrichtelement 3 umfasst ferner einen ersten Schlitz 31, einen zweiten Schlitz 32, einen dritten Schlitz 33 und einen vierten Schlitz 34. Der erste Schlitz 31 und der dritte Schlitz 33 verlaufen in radialer Richtung, ausgehend von einer Mittelachse des Ausrichtelements 3, und liegen einander um 180° gegenüber (vgl. Figur 3). Der zweite Schlitz 32 und der vierte Schlitz 34 verlaufen in Umfangsrichtung über einen Kreiswinkel von jeweils ca. 150°. Dabei schneidet der erste Schlitz 31 den zweiten Schlitz 32 und der dritte Schlitz 33 schneidet den vierten Schlitz 34. Alle Schlitze sind in Axialrichtung X-X durchgehend ausgebildet. Hierdurch ergibt sich eine große Flexibilität des Ausrichtelements 3. Dabei ergibt sich eine Flexibilität sowohl in Axialrichtung X-X des Ausrichtelements 3, insbesondere durch den zweiten und vierten Schlitz 32, 34 sowie auch in radialer Richtung zur Mittelachse, insbesondere durch den ersten und dritten Schlitz 31, 33.

Weiterhin umfasst das Ausrichtelement 3 eine Zunge 30, welche ausgehend vom Randbereich 37 radial nach Innen in den ersten Schlitz 31 vorsteht. Dabei ist die Zunge 30, wie insbesondere aus Figur 5 ersichtlich, noch in Axialrichtung X-X leicht umgebogen. Ferner umfasst das Ausrichtelement 3 eine erste Lasche 38 und eine zweite Lasche 39. Die erste und zweite Lasche 38, 39 sind dabei vom Grundbereich 36 ebenfalls in Axialrichtung X-X in die gleiche Richtung wie die Zunge 30 umgebogen (vgl. Figur 5). Dabei berührt die Zunge 30 die beiden Laschen 38, 39 seitlich. Hierdurch ergibt sich, wie am besten aus den Figuren 5, 6 und 7 ersichtlich ist, außerhalb der Grundebene E des Ausrichtelements eine Kontaktzone zwischen der Zunge 30 und den beiden Laschen 38, 39. Alternativ kann auch ein kleiner, für den Schweißvorgang unkritischer Abstand zwischen der Zunge und den Laschen vorgesehen werden, welcher durch den Schweißvorgang überbrückt wird.

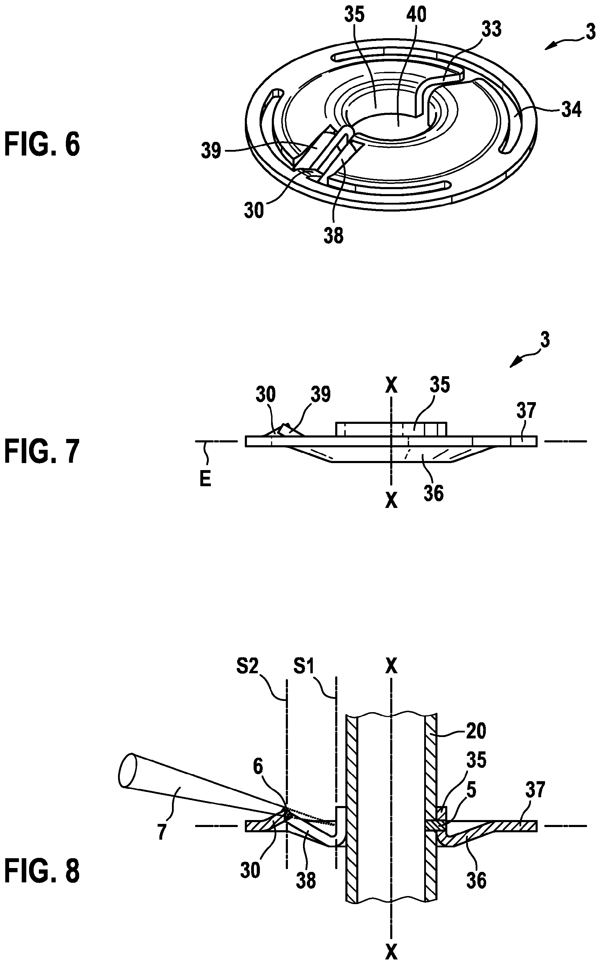

Aufgrund der hohen Flexibilität des Ausrichtelements 3 sowohl in axialer Richtung X-X als auch in radialer Richtung, kann das Ausrichtelement 3 schnell und einfach auf ein rohrförmiges Teil 20 der Einspritzbaugruppe 2 aufgeschoben werden. Hierbei kann eine Position des Ausrichtelements im aufgeschobenen Zustand auf den rohrförmigen Teil 20 gegebenenfalls auch noch leicht korrigiert werden. Die Position des Ausrichtelements 3 ist deshalb so wichtig, um eine Ausrichtung der Einspritzbaugruppe 2 in einem Spritzwerkzeug sicherzustellen, um die Steckeranspritzung 4 in richtiger Ausrichtung gegenüber der Einspritzbaugruppe 2 anzuspritzen. Damit das Ausrichtelement 3 während des Spritzvorgangs nicht verschoben wird, wird dieses mittels einer Schweißverbindung an das rohrförmige Teil 20 mittels eines Laserstrahls 7 angeschweißt. Hierdurch ergibt sich eine Schweißnaht 5 zwischen dem Bund 35 des Ausrichtelements 3 und dem rohrförmigen Teil 20 (vgl. Figur 8). Für den Schweißvorgang wird dabei das rohrförmige Teil 20 mitsamt dem Ausrichtelement 3 gedreht. Dabei kommt, wie in Figur 8 gezeigt, der Laserstrahl 7 im Bereich der Zunge 30 nicht mehr mit dem Bund 35 bzw. dem rohrförmigen Teil 20 in Kontakt, sondern mit der in Axialrichtung X-X vorstehenden Zunge 30 und den vorstehenden Laschen 38, 39 in Kontakt. Hierdurch wird die Zunge 30 an die Laschen 38 bzw. 39 angeschweißt. Wie aus Figur 8 deutlich ist, liegt dabei eine Schweißebene S2, in welcher die Zunge 30 mit den Laschen 38, 39 verschweißt wird, außerhalb der normalen Schweißebene S1, in welcher der Bund 35 an das rohrförmige Teil 20 geschweißt wird. Durch die Verschweißung der Zunge 30 mit den Laschen 38, 39 erfolgt eine Versteifung des Ausrichtelements 3. Dadurch kann das Ausrichtelement 3 den starken Drücken während des nachfolgenden Spritzvorgangs zur Herstellung der Steckeranspritzung 4 widerstehen, ohne dass das Ausrichtelement 3 verbogen wird bzw. seine Position ändert.

Somit wird durch die Form des Ausrichtelements 3 der Laserstrahl 7 während des Schweißvorgangs im Bereich der Zunge unterbrochen, wobei der Laserstrahl 7 derart eingestellt ist, dass auch ein Schweißen der Zunge an die Laschen außerhalb des eigentlichen Fokus des Laserstrahls möglich ist. Da im Bereich der Zunge 30 sowieso der erste Schlitz 31 des Ausrichtelements 3 vorgesehen ist, wird der Bund 35 nur im Bereich der Laschen 38, 39 abgeschirmt. Hierdurch wird jedoch die Schweißverbindung 5 entlang des Bundes 35 nur unwesentlich um eine Breite der Laschen verringert.

Somit kann mittels eines einzigen Schweißvorgangs während des Drehens des rohrförmigen Teils 20 sowohl das Ausrichtelement 3 an das rohrförmige Teil 20 angeschweißt werden, als auch im Bereich der Zunge 30 und der Laschen 38, 39 versteift werden. Es sei angemerkt, dass auch im Bereich des dritten Schlitzes 33 eine entsprechend gebildete Zunge und entsprechend gebildete Laschen vorgesehen werden können, um eine zweite Versteifung am Ausrichtelement automatisch bereitzustellen.

Somit kann erfindungsgemäß das Ausrichtelement 3 für die Montage eine ausreichende Flexibilität aufweisen, so dass die Montage schnell und einfach und insbesondere sehr genau ausgeführt werden kann. Anschließend wird dann gleichzeitig mit der Fixierung des Ausrichtelements 3 auf dem rohrförmigen Teil 20 das Ausrichtelement 3 auch versteift, wobei aufgrund der Zunge und der Laschen des Ausrichtelements 3 die Versteifung und Fixierung des Ausrichtelements in einem Schritt erfolgen kann. Somit kann erfindungsgemäß die Herstellung eines Einspritzventils signifikant vereinfacht und verbilligt werden, wobei gleichzeitig auch noch die Genauigkeit für eine später notwendige Ausrichtung des Einspritzventils in einer Brennkraftmaschine verbessert werden kann.

Nachfolgend werden weitere Ausführungsbeispiele der Erfindung im Detail beschrieben, wobei gleiche bzw. funktional gleiche Teile mit den gleichen Bezugszeichen wie im ersten Ausführungsbeispiel bezeichnet sind.

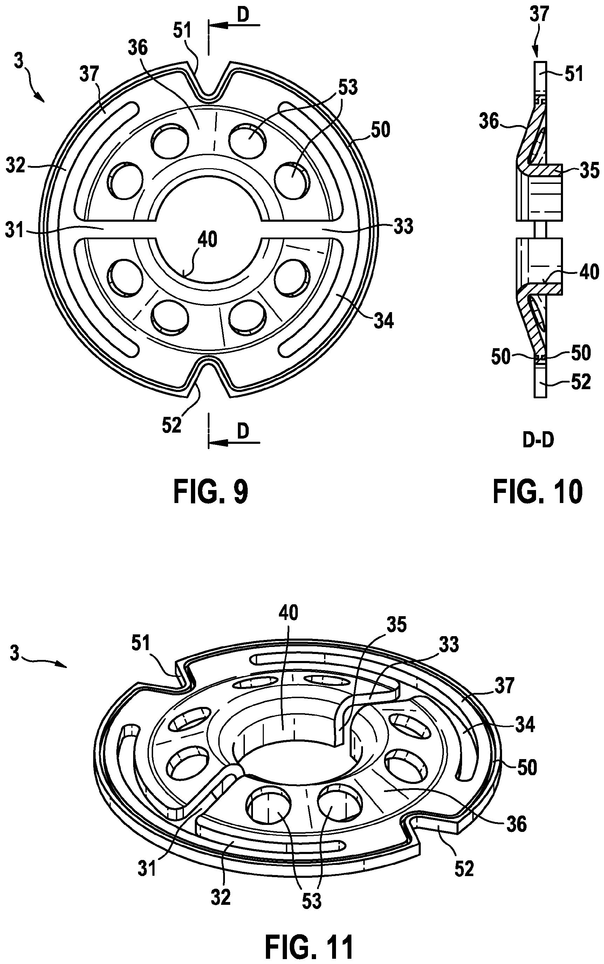

In den Figuren 9 bis 11 ist ein Ausrichtelement 3 gemäß einem zweiten Ausführungsbeispiel der Erfindung im Detail dargestellt. Wie aus der Draufsicht von Figur 9 ersichtlich ist, umfasst das Ausrichtelement 3 des zweiten Ausführungsbeispiels am Randbereich 37 zwei Ausrichteinrichtungen in Form eines ersten und zweiten V-förmigen Einschnitts 51, 52. Ferner sind eine Vielzahl von runden Durchlassöffnungen 53 vorgesehen. Mit den V-förmigen Einschnitten 51, 52 kann das Ausrichtelement sicher im Spritzgusswerkzeug ausgerichtet werden. Weiterhin stellen während des Spritzvorgangs die Durchlassöffnungen 53 sicher, dass das Spritzgussmaterial sicher und schnell zu beiden Seiten des Ausrichtelements 3 gelangen kann. Wie insbesondere aus den Figuren 9 und 11 ersichtlich ist, kann das Ausrichtelement 3 des zweiten Ausführungsbeispiels sehr einfach und kostengünstig hergestellt werden, insbesondere, da keine Laschen und/oder Zungen vorgesehen sind. Weiterhin weist das Ausrichtelement 3 des zweiten Ausführungsbeispiels eine Labyrinthanordnung 50 auf. Die Labyrinthanordnung 50 umfasst in diesem Ausführungsbeispiel jeweils eine umlaufend geschlossene Nut, wobei an beiden Seiten des Ausrichtelements jeweils eine Nut vorgesehen ist. Diese beiden Nuten stellen sicher, dass nach dem Spritzvorgang eine sehr gute Abdichtung insbesondere von Außen in Richtung nach Innen möglich ist. Hierdurch kann eine Fluiddichtheit eines Einspritzventils im Bereich des Ausrichtelements 3 weiter verbessert werden.

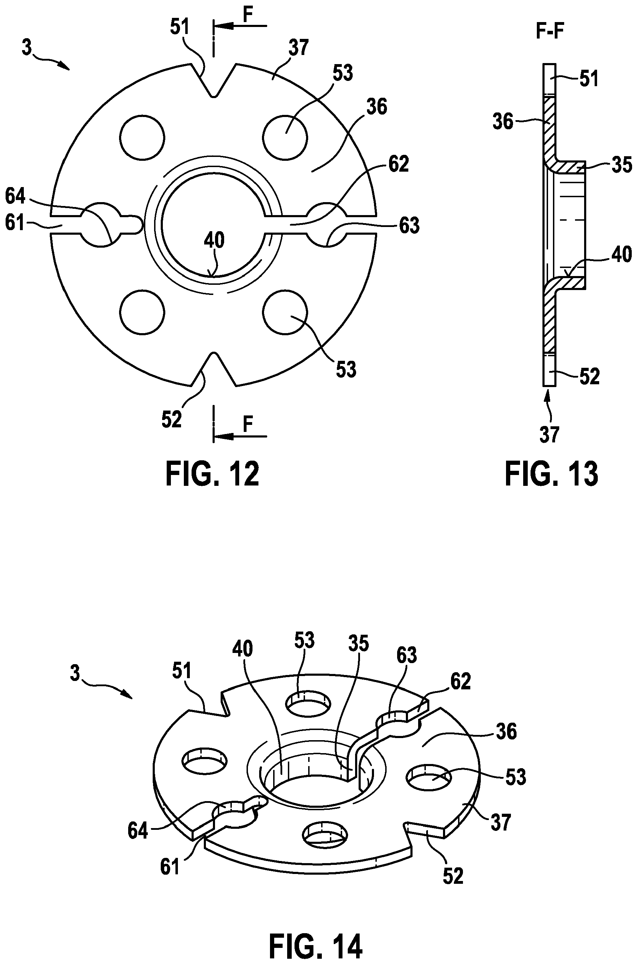

Die Figuren 12 bis 14 zeigen ein Ausrichtelement 3 gemäß einem dritten Ausführungsbeispiel der Erfindung. Dabei weist das Ausrichtelement 3 des dritten Ausführungsbeispiels keine umlaufenden Schlitze auf, sondern zwei in Radialrichtung verlaufende Schlitze 61, 62. Dabei ist der Schlitz 62 als radial durchgehender Schlitz von der zentrischen Durchgangsöffnung 40 bis zum Randbereich 37 ausgebildet. Somit weist das Ausrichtelement 3 bei einer Draufsicht (vgl. Figur 12) eine C-förmige Form auf. Der vom Bund 35 zum Randbereich 37 durchgehende Schlitz 62 stellt dabei insbesondere eine verbesserte Flexibilität in axialer Richtung bereit. Ferner kann das Ausrichtelement 3 auch in Umfangsrichtung etwas aufgespreizt werden, so dass eine besonders einfache und schnelle Montage möglich ist. Weiterhin weist das Ausrichtelement 3 des dritten Ausführungsbeispiels erweiterte Bereiche 63, 64 auf, welche an den Schlitzen 61, 62 vorgesehen sind. Hierdurch wird sichergestellt, dass das Spritzgussmaterial auch die Schlitze 61, 62 vollständig ausfüllt, da die Schlitze jeweils relativ schmal gebildet sind. Weiterhin liegen der Randbereich 37 und der Grundbereich 36 des Ausrichtelements 3 in einer gemeinsamen Ebene (vgl. den Schnitt von Figur 13).

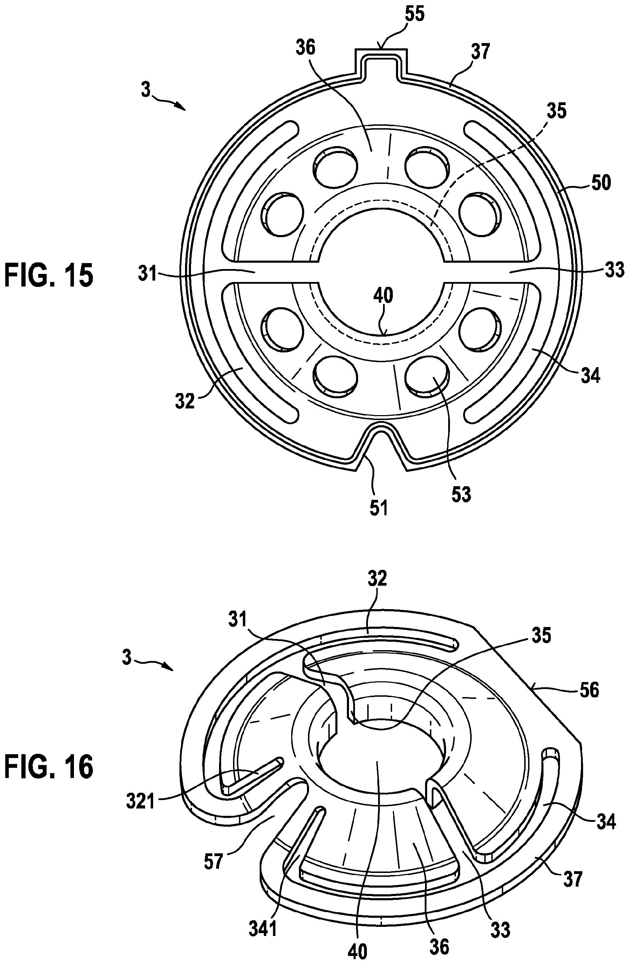

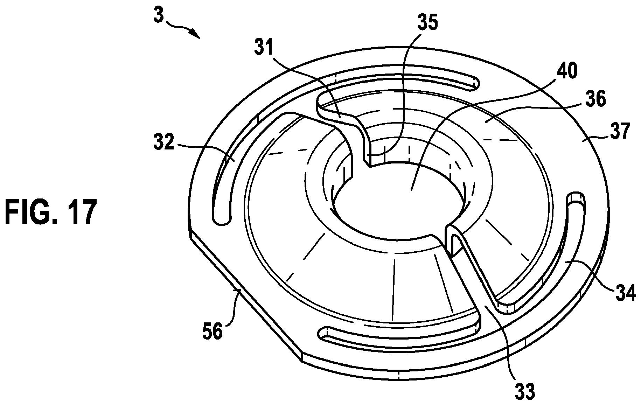

Die Figuren 15 bis 17 zeigen weitere Ausführungsbeispiele der Erfindung. Beim in Figur 15 gezeigten vierten Ausführungsbeispiel ist als Ausrichteinrichtung am Randbereich 37 des Ausrichtelements 3 eine in Radialrichtung vorstehende Anlagefläche 55 und ein V-förmiger Einschnitt 51 vorgesehen. Der Einschnitt 51 und die Anlageflächen 55 liegen sich dabei um 180° gegenüber. Das in Figur 16 gezeigte fünfte Ausführungsbeispiel des Ausrichtelements 3 zeigt eine durch Materialwegnahme am Randbereich 37 entstandene geradlinige Anlagefläche 56. Für eine weiter verbesserte Flexibilität weisen die in Umfangsrichtung verlaufenden Schlitze 34, 32 einen ersten und einen zweiten radial nach innen gerichteten Fortsatzschlitz 321 und 341 auf. Die beiden Fortsatzschlitze 321, 341 verlaufen dabei parallel zu einem ebenfalls zur Ausrichtung verwendeten vertieften Einschnitt 57. Weiterhin sind beim fünften Ausführungsbeispiel keine Durchlassöffnungen vorgesehen. Das in Figur 17 gezeigte sechste Ausführungsbeispiel weist ebenfalls eine durch Materialwegnahme am äußeren Randbereich 37 des Ausrichtelements entstandene Anlagenfläche 56 auf. Beim sechsten Ausführungsbeispiel fehlen jedoch die Fortsatzschlitze des fünften Ausführungsbeispiels sowie der vertiefte Einschnitt des fünften Ausführungsbeispiels. Dadurch kann das sechste Ausführungsbeispiel sehr einfach und kostengünstig hergestellt werden.

## Patentansprüche

1. Verfahren zur Herstellung eines Einspritzventils (1) mit einer Umspritzung (4), umfassend die Schritte:
- Bereitstellen einer Einspritzbaugruppe (2),
- Aufschieben eines scheibenförmigen Ausrichtelements (3) auf ein Teil (20) der Einspritzbaugruppe, wobei das Ausrichtelement (3) einen Schlitz (31) aufweist, um eine ausreichende Flexibilität aufzuweisen,
- Anschweißen des Ausrichtelements (3) an das Teil (20) der Einspritzbaugruppe (2), wobei im Schritt des Anschweißens gleichzeitig auch zumindest ein Teil des Schlitzes (31) zugeschweißt wird, um das Ausrichtelement (3) zu versteifen, und
- Anspritzen der Umspritzung (4) an die Einspritzbaugruppe (2).

2. Verfahren nach Anspruch 1, **dadurch gekennzeichnet, dass** während des Schritts des Anschweißens die Einspritzbaugruppe (2) mitsamt dem Ausrichtelement (3) gedreht wird.

3. Verfahren nach einem der vorhergehenden Ansprüche, **dadurch gekennzeichnet, dass** eine Schweißebene (S1), in welcher das Ausrichtelement (3) an das Teil (20) der Einspritzbaugruppe (2) angeschweißt wird und eine Schweißebene (S2), in welcher der Schlitz (31) zugeschweißt wird, auseinanderfallen.

4. Verfahren nach einem der vorhergehenden Ansprüche, **dadurch gekennzeichnet, dass** das Ausrichtelement (3) eine Zunge (30) aufweist, wobei die Zunge im Schritt des Anschweißens an wenigstens einer ihrer Umfangsseiten an das Ausrichtelement angeschweißt wird.

5. Verfahren nach Anspruch 4, **dadurch gekennzeichnet, dass** das Ausrichtelement (3) eine erste Lasche (38) und/oder eine zweite Lasche (39) aufweist, und die Zunge (30) im Schritt des Anschweißens mit der ersten und/oder zweiten Lasche (38, 39) verschweißt wird.

6. Verfahren nach einem der vorhergehenden Ansprüche, **dadurch gekennzeichnet, dass** der Schritt des Anschweißens mittels eines Lasers erfolgt.

7. Einspritzventil mit einer Einspritzbaugruppe (2), einem Ausrichtelement (3) und einer Umspritzung (4),
**dadurch gekennzeichnet,**
**dass** das Ausrichtelement (3)-den folgenden Aufbau hat:
- einen in Axialrichtung (X-X) des Ausrichtelements verlaufenden Bund (35),
- einen sich an den Bund (35) radial anschließenden Grundbereich (36),
- einen sich an den Grundbereich (36) radial anschließenden Randbereich,
- eine zentrale Durchgangsöffnung (40), welche vom umlaufenden Bund (35) begrenzt wird, und
- wenigstens einen ersten, in Radialrichtung gerichteten Schlitz (31), welcher von der Durchgangsöffnung (40) radial nach außen verläuft,
- wobei der Schlitz (31) in Axialrichtung (X-X) durchgehend ausgebildet ist und zumindest ein Teil des Schlitzes (31) zugeschweißt ist, und
die Umspritzung (4) mit einer Ausrichtfläche (8) versehen ist.

8. Einspritzventil nach Anspruch 7, ferner umfassend wenigstens einen zweiten, in Umfangsrichtung gerichteten Schlitz (32), wobei die Schlitze (31, 32) in Axialrichtung (X-X) durchgehend ausgebildet sind.

9. Einspritzventil nach Anspruch 8, **dadurch gekennzeichnet, dass** sich der erste und zweite Schlitz (31, 32) schneiden.

10. Einspritzventil nach Anspruch 8 oder 9, ferner umfassend eine Zunge (30), welche in einen der Schlitze vorsteht.

11. Einspritzventil nach Anspruch 10, ferner umfassend eine erste und/oder zweite Lasche (38, 39), weiche am Grundbereich (36) benachbart zur Zunge (30) angeordnet sind.

12. Einspritzventil nach einem der Ansprüche 8 bis 11, ferner umfassend einen dritten, in Radialrichtung gerichteten Schlitz (33) und/oder einen vierten, in Umfangsrichtung gerichteten Schlitz (34), wobei der dritte und/oder vierte Schlitz in Axialrichtung (X-X) durchgehend gebildet sind.

13. Einspritzventil nach Anspruch 7, ferner umfassend einen zweiten, in Radialrichtung gerichteten Schlitz (62), wobei nur einer der in Radialrichtung gerichteten Schlitze als radial durchgehender Schlitz von der Durchgangsöffnung (40) bis zum Randbereich (37) des Ausrichtelements verläuft.

14. Einspritzventil nach einem der Ansprüche 7 bis 13, **dadurch gekennzeichnet, dass** wenigstens einer der Schlitze einen erweiterten Bereich (63, 64) aufweist.

15. Einspritzventil nach einem der Ansprüche 7 bis 14, **dadurch gekennzeichnet, dass** der Grundbereich (36) in einem Winkel (α) zu einer Grundebene (E) des Ausrichtelements (3) geneigt ist.

16. Einspritzventil nach einem der Ansprüche 7 bis 15, **dadurch gekennzeichnet, dass** der Grundbereich (36) eine Vielzahl von Durchlassöffnungen (53) aufweist.

17. Einspritzventil nach einem der Ansprüche 7 bis 16, **dadurch gekennzeichnet, dass** der Randbereich (37) wenigstens eine Einrichtung zum Ausrichten, insbesondere einen V-förmigen Einschnitt (51, 52) oder eine gerade Anlagefläche (55, 56), aufweist.

18. Einspritzventil nach einem der Ansprüche 7 bis 17, ferner umfassend eine Labyrinthanordnung (50) mit wenigstens einer Nut an einer Oberseite und/oder Unterseite des Ausrichtelements (3), wobei die Nut vollständig umlaufend ausgebildet ist.

19. Einspritzventil nach Anspruch 7, **dadurch gekennzeichnet, dass** die Umspritzung (4) das Ausrichtelement (3) vollständig einschließt.

## Claims

1. Method for producing an injection valve (1) having an injection-moulded encapsulation (4), comprising the steps:
- providing an injection assembly (2),
- pushing a disk-shaped alignment element (3) onto a part (20) of the injection assembly, wherein the alignment element (3) has a slot (31) in order to exhibit adequate flexibility,
- welding the alignment element (3) onto the part (20) of the injection assembly (2), wherein, during the welding-on step, at least a part of the slot (31) is simultaneously welded closed in order to stiffen the alignment element (3), and
- injection-moulding the injection-moulded encapsulation (4) onto the injection assembly (2).

2. Method according to Claim 1, **characterized in that**, during the welding-on step, the injection assembly (2) is rotated together with the alignment element (3).

3. Method according to one of the preceding claims, **characterized in that** a welding plane (S1) in which the alignment element (3) is welded onto the part (20) of the injection assembly (2), and a welding plane (S2) in which the slot (31) is welded closed, coincide.

4. Method according to one of the preceding claims, **characterized in that** the alignment element (3) has a tongue (30), wherein the tongue is welded at at least one of its circumferential sides to the alignment element during the welding-on step.

5. Method according to Claim 4, **characterized in that** the alignment element (3) has a first lug (38) and/or a second lug (39), and the tongue (30) is welded to the first and/or second lug (38, 39) during the welding-on step.

6. Method according to one of the preceding claims, **characterized in that** the welding-on step is performed by means of a laser.

7. Injection valve having an injection assembly (2), and alignment element (4) and an injection-moulded encapsulation (4),
**characterized**
**in that** the alignment element (3) has the following construction:
- a collar (35) running in an axial direction (X-X) of the alignment element,
- a main region (36) radially adjoining the collar (35),
- an edge region radially adjoining the main region (36),
- a central passage opening (40) which is delimited by the encircling collar (35), and
- at least one first slot (31) which is directed in a radial direction and which runs radially outward from the passage opening (40),
- wherein the slot (31) is formed so as to extend all the way through in the axial direction (X-X) and at least a part of the slot (31) is welded closed, and
the injection-moulded encapsulation (4) is equipped with an alignment surface (8).

8. Injection valve according to Claim 7, furthermore comprising at least one second slot (32) which is directed in a circumferential direction, wherein the slots (31, 32) are formed so as to extend all the way through in the axial direction (X-X).

9. Injection valve according to Claim 8, **characterized in that** the first and second slots (31, 32) intersect.

10. Injection valve according to Claim 8 or 9, furthermore comprising a tongue (30) which protrudes into one of the slots.

11. Injection valve according to Claim 10, furthermore comprising a first and/or second lug (38, 39), which are arranged on the main region (36) adjacent to the tongue (30).

12. Injection valve according to one of Claims 8 to 11, furthermore comprising a third slot (33) directed in a radial direction and/or a fourth slot (34) directed in a circumferential direction, wherein the third and/or fourth slot are formed so as to extend all the way through in the axial direction (X-X).

13. Injection valve according to Claim 7, furthermore comprising a second slot (62) which is directed in a radial direction, wherein only one of the slots directed in the radial direction runs as a slot extending radially all the way through from the passage opening (40) to the edge region (37) of the alignment element.

14. Injection valve according to one of Claims 7 to 13, **characterized in that** at least one of the slots has a widened region (63, 64).

15. Injection valve according to one of Claims 7 to 14, **characterized in that** the main region (36) is inclined at an angle (α) relative to a main plane (E) of the alignment element (3).

16. Injection valve according to one of Claims 7 to 15, **characterized in that** the main region (36) has a multiplicity of passage openings (53).

17. Injection valve according to one of Claims 7 to 16, **characterized in that** the edge region (37) has at least one device for alignment, in particular a V-shaped incision (51, 52) or a straight abutment surface (55, 56).

18. Injection valve according to one of Claims 7 to 17, furthermore comprising a labyrinth arrangement (50) with at least one groove on a top side and/or bottom side of the alignment element (3), wherein the groove is of fully encircling form.

19. Injection valve according to Claim 7, **characterized in that** the injection-moulded encapsulation (4) fully encloses the alignment element (3).

## Revendications

1. Procédé de fabrication d'une soupape d'injection (1) avec un surmoulage (4), comprenant les étapes suivantes :
- fourniture d'un module d'injection (2),
- enfoncement d'un élément d'alignement en forme de rondelle (3) sur une partie (20) du module d'injection, l'élément d'alignement (3) présentant une fente (31) destinée à présenter une flexibilité suffisante,
- raccordement par soudage de l'élément d'alignement (3) à la partie (20) du module d'injection (2), au moins une partie de la fente (31) étant également fermée par soudage lors de l'étape de raccordement par soudage, afin de rigidifier l'élément d'alignement (3), et
- moulage par injection du surmoulage (4) sur le module d'injection (2).

2. Procédé selon la revendication 1, **caractérisé en ce que** pendant l'étape de raccordement par soudage, le module d'injection (2) est tourné conjointement avec l'élément d'alignement (3).

3. Procédé selon l'une quelconque des revendications précédentes, **caractérisé en ce qu'**un plan de soudage (S1) dans lequel l'élément d'alignement (3) est raccordé par soudage à la partie (20) du module d'injection (2), et un plan de soudage (S2) dans lequel la fente (31) est fermée par soudage, coïncident.

4. Procédé selon l'une quelconque des revendications précédentes, **caractérisé en ce que** l'élément d'alignement (3) présente une langue (30), la langue, au cours de l'étape de raccordement par soudage, étant raccordée par soudage au niveau d'au moins l'un de ses côtés périphériques à l'élément d'alignement.

5. Procédé selon la revendication 4, **caractérisé en ce que** l'élément d'alignement (3) présente une première patte (38) et/ou une deuxième patte (39), et la langue (30) est soudée au cours de l'étape de raccordement par soudage à la première et/ou à la deuxième patte (38, 39).

6. Procédé selon l'une quelconque des revendications précédentes, **caractérisé en ce que** l'étape de raccordement par soudage est effectuée au moyen d'un laser.

7. Soupape d'injection comprenant un module d'injection (2), un élément d'alignement (3) et un surmoulage (4),
**caractérisée en ce que**
l'élément d'alignement (3) présente la structure suivants :
- un épaulement (35) s'étendant dans la direction axiale (X-X) de l'élément d'alignement,
- une région de base (36) se raccordant radialement à l'épaulement (35),
- une région de bord se raccordant radialement à la région de base (36),
- une ouverture de passage centrale (40) qui est limitée par l'épaulement périphérique (35), et
- au moins une première fente (31) orientée dans la direction radiale, qui s'étend radialement vers l'extérieur depuis l'ouverture de passage (40),
- la fente (31) étant réalisée sous forme continue dans la direction axiale (X-X) et au moins une partie de la fente (31) étant fermée par soudage, et
le surmoulage (4) étant pourvu d'une surface d'alignement (8).

8. Soupape d'injection selon la revendication 7, comprenant en outre au moins une deuxième fente (32) orientée dans la direction périphérique, les fentes (31, 32) étant réalisées sous forme continue dans la direction axiale (X-X).

9. Soupape d'injection selon la revendication 8, **caractérisée en ce que** la première et la deuxième fente (31, 32) s'intersectent.

10. Soupape d'injection selon la revendication 8 ou 9, comprenant en outre une langue (30) qui fait saillie dans l'une des fentes.

11. Soupape d'injection selon la revendication 10, comprenant en outre une première et/ou une deuxième patte (38, 39) qui sont disposées au niveau de la région de base (36) en position adjacente à la langue (30).

12. Soupape d'injection selon l'une quelconque des revendications 8 à 11, comprenant en outre une troisième fente (33) orientée dans la direction radiale et/ou une quatrième fente (34) orientée dans la direction périphérique, la troisième et/ou la quatrième fente étant formées de manière continue dans la direction axiale (X-X).

13. Soupape d'injection selon la revendication 7, comprenant en outre une deuxième fente (62) orientée dans la direction radiale, seulement l'une des fentes orientées dans la direction radiale s'étendant sous forme de fente continue radialement depuis l'ouverture de passage (40) jusqu'à la région de bord (37) de l'élément d'alignement.

14. Soupape d'injection selon l'une quelconque des revendications 7 à 13, **caractérisée en ce qu'**au moins l'une des fentes présente une région élargie (63, 64).

15. Soupape d'injection selon l'une quelconque des revendications 7 à 14, **caractérisée en ce que** la région de base (36) est inclinée suivant un angle (α) par rapport à un plan de base (E) de l'élément d'alignement (3).

16. Soupape d'injection selon l'une quelconque des revendications 7 à 15, **caractérisée en ce que** la région de base (36) présente une pluralité d'ouvertures de passage (53).

17. Soupape d'injection selon l'une quelconque des revendications 7 à 16, **caractérisée en ce que** la région de bord (37) présente au moins un dispositif d'alignement, en particulier une entaille en forme de V (51, 52) ou une surface d'appui droite (55, 56).

18. Soupape d'injection selon l'une quelconque des revendications 7 à 17, comprenant en outre un agencement à labyrinthe (50) comprenant au moins une rainure au niveau d'un côté supérieur et/ou d'un côté inférieur de l'élément d'alignement (3), la rainure étant réalisée sous forme complètement périphérique.

19. Soupape d'injection selon la revendication 7, **caractérisée en ce que** le surmoulage (4) entoure complètement l'élément d'alignement (3).
